# EUROPEAN PATENT APPLICATION

(11) **EP 4 718 758 A1**
(43) Date of publication of application: **01.04.2026**
(21) Application number: 25205341.8
(22) Date of filing: 29.09.2025
(51) Int. Cl.: H04L 1/08, H04L 1/00

(54) **BROADCAST PACKET TRANSMISSION METHOD AND SYSTEM, DEVICE, STORAGE MEDIUM, AND COMPUTER PROGRAM PRODUCT**

(30) Priority: 30.09.2024 CN 202411392256
(71) Applicant: Amlogic (Shanghai) Co., Ltd, Shanghai 201203 (CN)
(72) Inventor: XU, Yanchao, Shanghai (CN); YU, Ching Hwa, Shanghai (CN)
(74) Representative: Maiwald GmbH

(57) **Abstract**

A broadcast packet transmission method and system, a device, a storage medium, and a computer program product are provided. The method includes: obtaining a link layer data packet, the link layer data packet including a target data unit for repeated sending; performing duplication and encoding processing, and encoding the target data unit into a physical layer interval to obtain multiple physical layer intervals respectively carrying same target data unit information as repetition intervals; and sequentially transmitting the multiple repetition intervals. The present disclosure is conducive to improving the robustness of broadcast packet transmission.

## Description

### TECHNICAL FIELD

Embodiments of the present disclosure relate to the technical field of image processing, and in particular, to a broadcast packet transmission method and system, a device, a storage medium, and a computer program product.

### BACKGROUND

In a Bluetooth Low Energy Audio (BLE Audio), a Broadcast Audio or an Auracast Audio is introduced to allow multiple devices to simultaneously monitor a broadcast sound source. For example, a group of people in public places may wear earphones to listen to audio information together. Audio streams of the broadcast audio are Broadcast Isochronous Streams (BIS), that is, synchronous audio streams based on broadcast. In the BIS, a device transmitting synchronous audio streams cannot determine how many devices may be receiving audios. These devices have no connection with each other, involve no acknowledgment, and require no connection link to be established.

Audio streams of the broadcast audio are on a link layer (LL) of the BLE, and depend on a Periodic Advertising mechanism of the BLE. In this mechanism, audio stream data is divided into different Broadcast Isochronous Group Events (BIG Event), and each BIG Event may include one or more Broadcast Isochronous Stream Events (BIS Event). The BIS Event is further divided into one or more subevents, and each subevent may send a link layer data packet.

### SUMMARY

A problem solved by embodiments of the present disclosure is to provide a broadcast packet transmission method and system, a device, a storage medium, and a computer program product, so as to be conducive to improving the robustness of broadcast packet transmission.

To solve the above problem, an embodiment of the present disclosure provides a broadcast packet transmission method suitable for a sending end, including: obtaining a link layer data packet, the link layer data packet including a target data unit for repeated sending; performing duplication and encoding processing, and encoding the target data unit into a physical layer interval to obtain multiple physical layer intervals respectively carrying same target data unit information as repetition intervals; and sequentially transmitting the multiple repetition intervals.

Optionally, the step of performing duplication and encoding processing, and encoding the target data unit into a physical layer interval to obtain multiple physical layer intervals respectively carrying same target data unit information as repetition intervals includes: encoding the target data unit into a physical layer interval to obtain a physical layer interval carrying the target data unit information as an original interval; and performing one or more duplication processing on the original interval to obtain one or more continuous duplicated intervals, both the original interval and the one or more continuous duplicated intervals being used as the repetition intervals.

Optionally, the original interval is a physical layer interval carrying one or more different target data unit information, a physical layer interval carrying some or all data block information of one target data unit, or a physical layer interval carrying some or all data block information of the multiple target data units.

Optionally, before the performing one or more duplication processing on the original interval, the method further includes: configuring an auxiliary encoding field and a channel estimation field at a tail of the original interval; and in the step of performing one or more duplication processing on the original interval, further performing duplication processing on the auxiliary encoding field and the channel estimation field corresponding to the original interval to obtain an auxiliary encoding field and a channel estimation field configured at a tail of the duplicated interval.

Optionally, before the encoding the target data unit into a physical layer interval, the method further includes: performing whitening processing on the target data unit.

Optionally, the step of encoding the target data unit into a physical layer interval to obtain a physical layer interval carrying the target data unit information as an original interval includes: encoding the target data unit into a physical layer interval to obtain a target encoding block; and adding a symbol zero padding to a tail of the target encoding block to enable a length of a physical layer interval formed by the target encoding block and the symbol zero padding to reach a preset interval length, and using the physical layer interval formed by the target encoding block and the symbol zero padding as the original interval; or the step of obtaining a link layer data packet includes: obtaining an initial data packet; and adding a zero padding byte to a tail of the initial data packet 09 so that a length of a data packet formed by the initial data packet and the zero padding byte reaches a preset data packet length, and forming the link layer data packet by the initial data packet and the zero padding byte.

Optionally, the performing duplication and encoding processing includes: repeatedly encoding the target data unit to respectively encode the target unit into multiple physical layer intervals to obtain multiple physical layer intervals respectively carrying same target data unit information as repetition intervals.

Optionally, before the performing duplication and encoding processing, the method further includes: configuring a control header field for information indication, the information indication including sequence numbers of the repetition intervals and a quantity of the repetition intervals, and the information indication further including modulation and encoding related information of a data unit header field.

An embodiment of the present disclosure further provides a broadcast packet transmission method suitable for a receiving end, including: sequentially receiving multiple physical layer intervals, and performing joint decoding processing on the multiple physical layer intervals, the multiple physical layer intervals including multiple successively continuous repetition intervals, and the multiple repetition intervals being physical layer intervals carrying same data information.

Optionally, the sequentially receiving multiple physical layer intervals, and performing joint decoding processing on the multiple physical layer intervals includes: performing one or more decoding processing, the decoding processing including: receiving the physical layer interval; decoding the physical layer interval to obtain a data packet; and transmitting the data packet to a link layer for check processing.

Optionally, in the step of decoding processing, after the receiving the physical layer interval and before the decoding the physical layer interval, the method further includes: caching the physical layer interval; and when the physical layer interval is a repetition interval other than an initial repetition interval in multiple continuous repetition intervals, after the caching the physical layer interval and before the decoding the physical layer interval, the method further includes: combining the repetition interval with all repetition intervals cached in decoding processing before the current decoding processing; and decoding the combined repetition interval in the step of decoding the physical layer interval.

Optionally, after transmitting the data packet to a link layer for check processing, the method further includes: stopping receiving all the subsequent continuous repetition intervals when a result of the check processing is qualified.

Optionally, the sequentially receiving multiple physical layer intervals, and performing joint decoding processing on the multiple physical layer intervals includes: performing one or more caching processing until all the repetition intervals are cached, the caching processing including: receiving the repetition interval; caching the repetition interval; combining all the cached repetition intervals after one or more caching processing; decoding the combined repetition interval to obtain a data packet; and transmitting the data packet to a link layer for check processing.

Optionally, the step of combining all the cached repetition intervals includes: performing weighted average combining on the information of all the cached repetition intervals; or performing soft combining on the information of all the cached repetition intervals.

Optionally, before the sequentially receiving multiple physical layer intervals, and performing joint decoding processing on the multiple physical layer intervals, the method further includes: receiving a control header field, the control header field being used for information indication, and the information indication including sequence numbers of the repetition intervals and a quantity of the repetition intervals; and decoding the control header field to obtain sequence numbers of the repetition intervals and a quantity of the repetition intervals in multiple physical layer intervals that are sequentially received.

Correspondingly, an embodiment of the present disclosure further provides a broadcast packet transmission system suitable for a sending end, including: a link layer data packet receiving circuit, configured to obtain a link layer data packet, the link layer data packet including a target data unit for repeated sending; a duplication and encoding circuit, configured to encode the target data unit into a physical layer interval to obtain multiple physical layer intervals respectively carrying same target data unit information as repetition intervals; and a transmitting circuit, configured to sequentially transmit the multiple repetition intervals.

Correspondingly, an embodiment of the present disclosure further provides a broadcast packet transmission system suitable for a receiving end, including: a physical layer interval receiving and combining circuit, configured to sequentially receive multiple physical layer intervals, and perform joint decoding processing on the multiple physical layer intervals, the multiple physical layer intervals including multiple successively continuous repetition intervals, and the multiple repetition intervals being physical layer intervals carrying same data information.

Correspondingly, an embodiment of the present disclosure further provides a device, including at least one memory and at least one processor, the memory storing one or more computer instructions, where the one or more computer instructions are executed by the processor to implement the broadcast packet transmission method suitable for a sending end or the broadcast packet transmission method suitable for a receiving end provided in the embodiments of the present disclosure.

Correspondingly, an embodiment of the present disclosure further provides a storage medium. The storage medium stores one or more computer instructions, and the one or more computer instructions are used for implementing the broadcast packet transmission method suitable for a sending end or the broadcast packet transmission method suitable for a receiving end provided in the embodiments of the present disclosure.

Correspondingly, an embodiment of the present disclosure further provides a computer program product, including a computer program/instruction. When being executed by a processor, the computer program/instruction implements the broadcast packet transmission method suitable for a sending end or the broadcast packet transmission method suitable for a receiving end provided in the embodiments of the present disclosure.

Compared with the prior art, the technical solutions of the embodiments of the present disclosure have the following advantages:
In the broadcast packet transmission method suitable for a sending end provided in the embodiments of the present disclosure, a link layer data packet is obtained, the link layer data packet including a target data unit for repeated sending; duplication and encoding processing is performed, and the target data unit is encoded into a physical layer interval to obtain multiple physical layer intervals respectively carrying same target data unit information as repetition intervals; and the multiple repetition intervals are sequentially transmitted. In the embodiments of the present disclosure, multiple repetition intervals with same data information are obtained by duplication and encoding processing, and the multiple repetition intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

In the broadcast packet transmission method suitable for a receiving end provided in the embodiments of the present disclosure, multiple physical layer intervals are sequentially received, and joint decoding processing is performed on the multiple physical layer intervals, the multiple physical layer intervals including multiple successively continuous repetition intervals, and the multiple repetition intervals being physical layer intervals carrying same data information. In the embodiments of the present disclosure, multiple continuous repetition intervals are sequentially received, the multiple repetition intervals carrying same data information, that is, multiple physical layer intervals with same information can be sequentially and continuously received, which is conducive to increasing the probability that the receiving end successfully receives the information carried in the original interval, thereby being conducive to improving the robustness of broadcast packet transmission.

### BRIEF DESCRIPTION OF THE DRAWINGS

FIG. 1 is a flowchart of a broadcast packet transmission method suitable for a sending end according to an embodiment of the present disclosure;
FIG. 2 to FIG. 8 are schematic diagrams corresponding to steps in a broadcast packet transmission method suitable for a sending end according to an embodiment of the present disclosure;
FIG. 9 to FIG. 10 are flowcharts of a broadcast packet transmission method suitable for a receiving end according to an embodiment of the present disclosure;
FIG. 11 is a schematic diagram corresponding to steps in a broadcast packet transmission method suitable for a receiving end according to an embodiment of the present disclosure;
FIG. 12 to FIG. 13 are flowcharts of a broadcast packet transmission method suitable for a receiving end according to another embodiment of the present disclosure;
FIG. 14 is a flowchart of a broadcast packet transmission method suitable for a receiving end according to still another embodiment of the present disclosure;
FIG. 15 is a functional block diagram of a broadcast packet transmission system suitable for a sending end according to an embodiment of the present disclosure;
FIG. 16 is a functional block diagram of a broadcast packet transmission system suitable for a receiving end according to an embodiment of the present disclosure; and
FIG. 17 is a hardware structure diagram of a device according to an embodiment of the present disclosure.

### DETAILED DESCRIPTION

It can be known from the background that in audio streams of Broadcast Isochronous Streams (BIS), only a sending end sends data, and no acknowledgment is required from one or more receiving end devices. To increase the probability that a broadcast link layer (LL) data packet can be successfully received by one or more receiving end devices, in the BIS mechanism, currently, a same data packet is repeatedly sent in one Broadcast Isochronous Stream Event (BIS Event) by occupying multiple subevents, and a corresponding parameter of the quantity of times of repetition is an immediate repetition count (IRC). A transmission method matched with repeated sending of a data packet by a link layer is urgently needed at a physical layer, so as to improve the robustness of broadcast packet transmission.

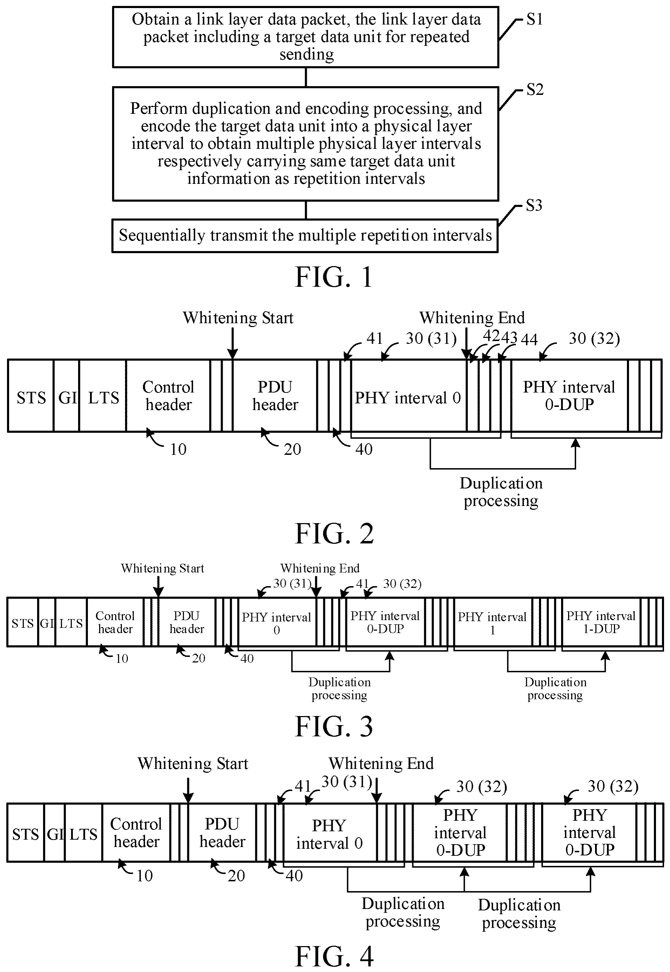

To solve the above technical problems, an embodiment of the present disclosure provides a broadcast packet transmission method suitable for a sending end. Referring to FIG. 1, FIG. 1 shows a flowchart of a broadcast packet transmission method suitable for a sending end according to an embodiment of the present disclosure.

In this embodiment, the broadcast packet transmission method suitable for a sending end includes the following basic steps:
step S1: a link layer data packet is obtained, the link layer data packet including a target data unit for repeated sending;
step S2: duplication and encoding processing is performed, and the target data unit is encoded into a physical layer interval to obtain multiple physical layer intervals respectively carrying same target data unit information as repetition intervals; and
step S3: the multiple repetition intervals are sequentially transmitted.

In the embodiments of the present disclosure, multiple repetition intervals with same data information are obtained by duplication and encoding processing, and the multiple repetition intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

To make the above objectives, features, and advantages of the embodiments of the present disclosure more apparent and easier to understand, specific embodiments of the present disclosure are described in detail below with reference to the accompanying drawings.

FIG. 2 to FIG. 8 are schematic diagrams corresponding to steps in a broadcast packet transmission method suitable for a sending end according to an embodiment of the present disclosure.

In this embodiment, the broadcast packet transmission method is suitable for a BLE broadcast audio. The BLE broadcast audio is a Bluetooth Low Energy Audio (BLE Broadcast Audio).

In the BLE broadcast audio, a Broadcast Audio or an Auracast Audio is introduced to allow multiple devices to simultaneously monitor a broadcast sound source. For example, a group of people in public places may wear earphones to listen to audio information together.

With reference to FIG. 1 to FIG. 8, step S1 is performed: a link layer data packet is obtained, the link layer data packet including a target data unit for repeated sending.

A link layer (LL) data packet includes data information that needs to be transmitted, and is sent to a Physical Layer (PHY) for encoding.

Specifically, in this embodiment, audio streams of the broadcast audio are on the link layer of the BLE, and depend on a Periodic Advertising mechanism of the BLE. In this mechanism, audio stream data is divided into different Broadcast Isochronous Group Events (BIG Event), and each BIG Event may include one or more Broadcast Isochronous Stream Events (BIS Event). The BIS Event is further divided into one or more subevents, and each subevent may send a link layer data packet.

The link layer data packet includes the target data unit for repeated sending, and the target data unit is used for repeated sending multiple times, so that the information of the target data unit is received by the receiving end for multiple times, thereby increasing the probability that the target data unit is successfully received.

Specifically, in this embodiment, a same target data packet is repeatedly sent in one BIS event by occupying multiple subevents, and a corresponding parameter of the quantity of times of repetition is an immediate repetition count (IRC). A larger IRC parameter indicates a higher probability that the information of the target data packet is successfully received by the receiving end.

In this embodiment, in the step of obtaining a link layer data packet, the target data unit includes multiple data blocks.

Specifically, a High Data Throughput Multi-Block Format1 (HDT Multi-Block Format1) of the BLE is introduced to the BLE broadcast. In this HDT Multi-Block Format1, one LL HDT Format1 includes multiple Payload Data Units (PDU), and each PDU may be partitioned into multiple data blocks (Block).

In this embodiment, the target data unit is a PDU, including multiple data blocks (Block). The data blocks are independent of each other and have independent link layer check codes. Therefore, when the data blocks are received by the receiving end, each data block may be separately checked. If a data block in a target data unit is not received successfully, other data blocks in the target data unit are not affected, which is conducive to increasing the probability that the information of the target data unit is successfully received by the receiving end.

Step S2 is performed: duplication and encoding processing is performed, and the target data unit is encoded into a physical layer interval 30 to obtain multiple physical layer intervals 30 respectively carrying same target data unit information as repetition intervals.

Multiple physical layer intervals 30 respectively carrying same target data unit information are obtained as repetition intervals to send same data information to the receiving end for multiple times.

In this embodiment, before the duplication and encoding processing is performed, the method further includes: a control header field 10 is configured for information indication, the information indication including sequence numbers of the repetition intervals and a quantity of repetition intervals.

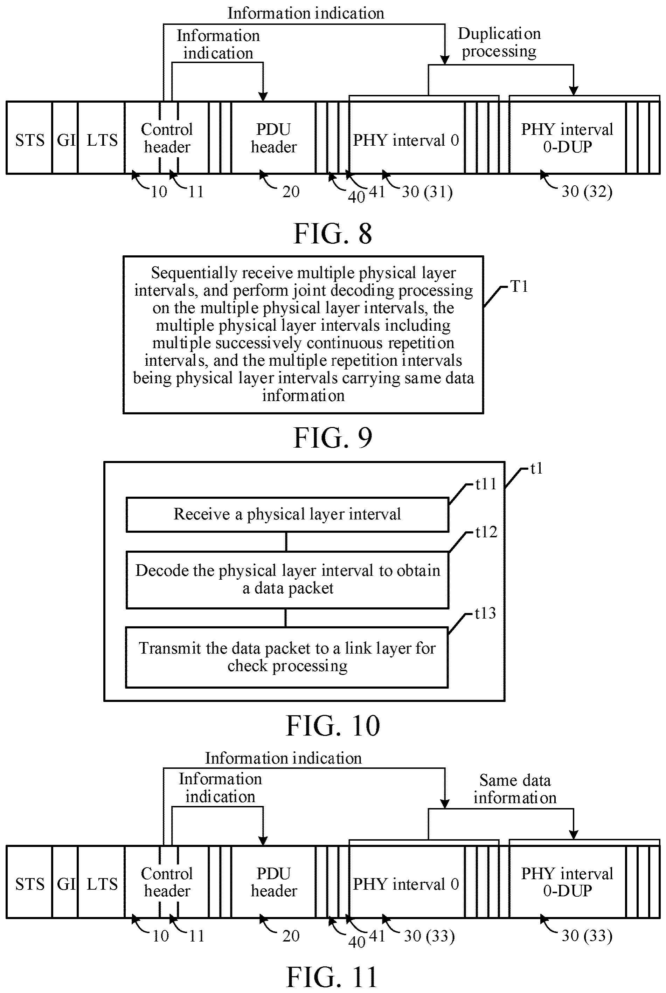

As shown in FIG. 8, the control header field 10 is responsible for receiving and parsing a control signal to manage and operate a device or an interface.

In this embodiment, before the duplication and encoding processing is performed, the method further includes: a control header field 10 is configured for information indication, the information indication including modulation and encoding related information of a data unit header (PDU Header) field 20.

The control header field 10 is used for information indication to indicate a physical layer parameter of the data unit header field 20 and a physical layer parameter of a data unit load. Specifically, the physical layer parameter may be selected as a parameter of a modulation and encoding policy that has a lower order than the lowest rate in the existing BLE HDT and higher robustness, so as to improve the sending robustness of the entire BLE HDT packet.

As an example, as shown in FIG. 8, in the step of configuring a control header field 10, a Rate Information (RI) field 11 is used for information indication.

Correspondingly, in this embodiment, the data unit header field 20 is configured according to the information indication.

In this embodiment, the step of performing duplication and encoding processing, and encoding the target data unit into a physical layer interval 30 to obtain multiple physical layer intervals 30 respectively carrying same target data unit information as repetition intervals includes: the target data unit is encoded into a physical layer interval 30 to obtain a physical layer interval 30 carrying target data unit information as an original interval 31.

The original interval 31 is used as a target for subsequent duplication, and is further used for subsequent transmission to the receiving end.

In the BLE broadcast, a physical layer interval (PHY Interval) refers to a bit stream continuously sent on a physical layer.

In this embodiment, in the step of encoding the target data unit into the physical layer interval 30, some or all data blocks of the target data unit are encoded into the physical layer interval 30 as the original interval 31.

Specifically, some or all Blocks of a PDU are encoded into the physical layer interval 30.

In other embodiments, in the step of encoding the target data unit into the physical layer interval, some or all data blocks of multiple target data units may further be encoded into the physical layer interval as the original interval.

Specifically, some or all Blocks of multiple PDUs are encoded into the physical layer interval 30.

In some other embodiments, in the step of obtaining a link layer data packet, the target data unit is not divided into multiple data blocks; and in the step of encoding the target data unit into a physical layer interval, one or more different target data units are encoded into the physical layer interval as the original interval.

That is, the original interval 31 is a physical layer interval 30 carrying one or more different target data unit information, a physical layer interval 30 carrying some or all data block information of one target data unit, or a physical layer interval 30 carrying some or all data block information of the multiple target data units.

In this embodiment, the step of encoding the target data unit into the physical layer interval 30 to obtain the physical layer interval 30 carrying target data unit information as the original interval 31 includes: the target data unit is encoded into the physical layer interval 30 to obtain a target encoding block.

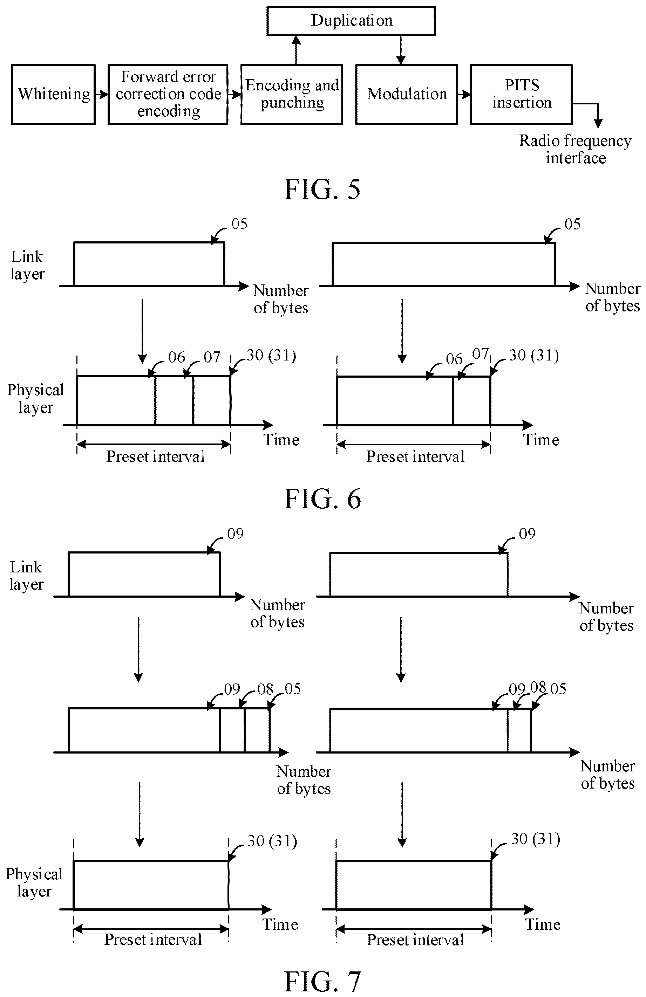

Specifically, as shown in FIG. 6, different target data units 05 in the link layer have different byte lengths. Therefore, when the target data unit 05 is encoded into the physical layer interval 30, the time lengths of the obtained target encoding blocks 06 are different.

In this embodiment, a symbol zero padding 07 is added to a tail of the target encoding block 06, so that a length of a physical layer interval 30 formed by the target encoding block 06 and the symbol zero padding 07 reaches a preset interval length, and the physical layer interval 30 formed by the target encoding block 06 and the symbol zero padding 07 is used as an original interval 31.

Specifically, as shown in FIG. 6, the time lengths of the target encoding blocks 06 are different, and symbol zero paddings 07 are added to the tails of the target encoding blocks 06. Specifically, different quantities of symbol zero paddings 07 are added to the tails of different target encoding blocks 06, so that the length of a physical layer interval 30 formed by each target encoding block 06 and each symbol zero padding 07 is the same, reaching a preset interval length, and the data information of the physical layer interval 30 is sent at a fixed time interval.

In other embodiments, code complementation may further be first performed on the link layer, and then, the physical layer is encoded to obtain the physical layer intervals 30 having the same length.

In other embodiments, referring to FIG. 7, the step of obtaining a link layer data packet includes: an initial data packet 09 is obtained; and a zero padding byte 08 is added to a tail of the initial data packet 09 so that a length of a data packet formed by the initial data packet 09 and the zero padding byte 08 reaches a preset data packet length, and the link layer data packet is formed by the initial data packet 09 and the zero padding byte 08, where the link layer data packet includes a target data unit 05.

Specifically, as shown in FIG. 7, on the link layer, initial data packets 09 have different byte lengths. First, a zero padding byte 08 is added to the tail of the initial data packet 09. Specifically, different quantities of zero padding bytes 08 are added to the tails of different initial data packets 09, so that a data packet formed by each initial data packet 09 and each zero padding byte 08 has the same length, reaching a preset data packet length. In the step of encoding a target data unit into a physical layer interval 30 to obtain a physical layer interval 30 carrying target data unit information as an original interval 31, the physical layer interval 30 of each original interval 31 is equal, so that the data information of the physical layer interval 30 is sent at a fixed time interval.

In this embodiment, before the target data unit is encoded into the physical layer interval 30, the method further includes: whitening processing is performed on the target data unit.

Correspondingly, in this embodiment, the information indication of the control header field 10 includes the sequence number of the original interval 31 and the quantity of duplicated intervals 32 corresponding to the original interval 31.

The sequence number of the original interval 31 means that during encoding, the physical layer interval 30 of the sequence number of the information indication is a physical layer interval 30 that needs to be duplicated, that is, the original interval 31, and the quantity of duplicated intervals 32 corresponding to the original interval 31 is the quantity of duplicated intervals 32 obtained by continuously duplicating the original interval 31 subsequently.

In this embodiment, before one or more duplication processing is subsequently performed on the original interval 31, the method further includes: an auxiliary encoding field and a channel estimation field 40 are configured at a tail of the original interval 31.

Specifically, the auxiliary encoding field and the channel estimation field 40 include Terminating bits 41, Symbol zero paddings 42, and Terminating symbols 43.

In this embodiment, physical layer interval training symbols (PITS) are further configured at the tails of the auxiliary encoding field and the channel estimation field 40 that are configured at the tail of the original interval 31.

In this embodiment, before the target data unit is encoded into the physical layer interval 30, the method further includes: preamble fields located before the control header field 10 are configured, and include Short Training Symbols (STS), a Guard Interval (GI), and Long Training Symbols (LTS).

It should be noted that the above whitening processing is limited only in the data unit header (PDU Header) field 20 and each physical layer interval 30. As shown in FIG. 2 to FIG. 4, Whitening Start is starting of the whitening processing, and Whitening End is ending of the whitening processing. The whitening processing does not include an auxiliary encoding field, a channel estimation field 40, and a physical layer interval training symbol between adjacent physical layer intervals 30.

In this embodiment, one or more duplication (DUP) processing is performed on the original interval 31 to obtain one or more continuous duplicated intervals 32, and both the original interval 31 and one or more continuous duplicated intervals 32 are used as repetition intervals.

One or more duplication processing is performed on the original interval 31 to obtain a duplicated interval 32 with data information the same as that carried in the original interval 31, so that the original interval 31 and the duplicated interval 32 can repeatedly send the target data unit to the receiving end.

In this embodiment, the duplicated interval 32 with information the same as that of the original interval 31 is obtained through duplication processing, and the original interval 31 and one or more duplicated intervals 32 are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

In this embodiment, in the step of performing one or more duplication processing on the original interval 31 to obtain one or more continuous duplicated intervals 32, physical layer intervals 30 with same data information may be obtained. As shown in FIG. 2, that is, except that a first physical layer interval 30 is an original interval 31 (PHY Interval 0), other physical layer intervals 30 are all duplicated intervals 32 (PHY Interval 0-DUP). Alternatively, corresponding duplication processing may be performed on multiple different physical layer intervals 30. As shown in FIG. 3, that is, a first physical layer interval 30 is an original interval 31 (PHY Interval 0), a second physical layer interval 30 is a duplicated interval 32 (PHY Interval 0-DUP) of the first original interval 31, a third physical layer interval 30 is another original interval 31 (PHY Interval 1), and a fourth physical layer interval 30 is a duplicated interval 32 (PHY Interval 1-DUP) of another original interval 31. Alternatively, the quantity of duplicated intervals 32 obtained through duplication processing is not limited. As shown in FIG. 4, that is, there may be one or more duplicated intervals 32 (PHY Interval 0-DUP) obtained through duplication processing on the original interval 31 (PHY Interval 0).

In this embodiment, in the step of performing one or more duplication processing on the original interval 31, the auxiliary encoding field and channel estimation field corresponding to the original interval 31 are further duplicated to obtain the auxiliary encoding field and channel estimation field configured at a tail of the duplicated interval 32.

In this embodiment, the above whitening processing is limited only in the data unit header (PDU Header) field 20 and each physical layer interval 30. As shown in FIG. 2 to FIG. 4, Whitening Start is starting of the whitening processing, and Whitening End is ending of the whitening processing. It can be seen that in the step of performing one or more duplication processing on the original interval 31, the data information of the duplicated original interval 31 is data information obtained after the whitening processing, and the whitening processing may end at the tail of the original interval 31 (as shown by the Whitening End in FIG. 2 to FIG. 4). The step of the whitening processing does not need to be performed in the duplicated interval 32, which is conducive to simplifying the program calculation and improving the broadcast packet transmission efficiency.

In this embodiment, before the repetition interval is subsequently transmitted, the method further includes: modulation processing is performed on the physical layer interval 30.

As an example, as shown in FIG. 5, a process at the sending end includes: whitening processing; forward error correction code encoding; encoding and punching; duplication processing; modulation processing; and PITS insertion, finally routed to a radio frequency interface to send data information to the receiving end.

In other embodiments, the step of performing duplication and encoding processing may further include: the target data unit is repeatedly encoded to respectively encode the target unit into multiple physical layer intervals to obtain multiple physical layer intervals respectively carrying same target data unit information as repetition intervals.

Step S4 is performed: the multiple repetition intervals are sequentially transmitted.

In this embodiment, multiple repetition intervals with same data information are obtained by duplication and encoding processing, and the multiple repetition intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

Correspondingly, in this embodiment, the original interval 31 and one or more duplicated intervals 32 are sequentially transmitted.

The original interval 31 and one or more duplicated intervals 32 are sequentially transmitted, so that the receiving end sequentially receives the original interval 31 and one or more duplicated intervals 32 to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

The present disclosure further provides a broadcast packet transmission method suitable for a receiving end. Referring to FIG. 9, a broadcast packet transmission method suitable for a receiving end includes the following basic steps:
step T1: multiple physical layer intervals are sequentially received, and joint decoding processing is performed on the multiple physical layer intervals, the multiple physical layer intervals including multiple successively continuous repetition intervals, and the multiple repetition intervals being physical layer intervals carrying same data information.

In this embodiment, multiple continuous repetition intervals are sequentially received, the multiple repetition intervals being physical layer intervals carrying same data information, that is, multiple physical layer intervals with same information can be sequentially and continuously received, which is conducive to increasing the probability that the receiving end successfully receives the information carried in the original interval, thereby being conducive to improving the robustness of broadcast packet transmission.

FIG. 10 shows a flowchart of a broadcast packet transmission method suitable for a receiving end according to an embodiment of the present disclosure.

In this embodiment, the step of sequentially receiving multiple physical layer intervals, and performing joint decoding processing on the multiple physical layer intervals includes:
step t1: one or more decoding processing is performed;
the decoding processing includes:
   step t11: the physical layer interval is received;
   step t12: the physical layer interval is decoded to obtain a data packet; and
   step t13: the data packet is transmitted to a link layer for check processing.

To make the above objectives, features, and advantages of the embodiments of the present disclosure more apparent and easier to understand, specific embodiments of the present disclosure are described in detail below with reference to the accompanying drawings.

FIG. 11 is a schematic diagram corresponding to steps in a broadcast packet transmission method suitable for a receiving end according to an embodiment of the present disclosure.

In this embodiment, the broadcast packet transmission method is suitable for a BLE broadcast audio. The BLE broadcast audio is a Bluetooth Low Energy Audio (BLE Broadcast Audio).

In the BLE broadcast, a Broadcast Audio or an Auracast Audio is introduced to allow multiple devices to simultaneously monitor a broadcast sound source. For example, a group of people in public places may wear earphones to listen to audio information together.

With reference to FIG. 9 to FIG. 11, step T1 is performed: multiple physical layer intervals 30 are sequentially received, and joint decoding processing is performed on the multiple physical layer intervals 30, the multiple physical layer intervals 30 including multiple successively continuous repetition intervals 33, and the multiple repetition intervals 33 being physical layer intervals 30 carrying same data information.

In this embodiment, multiple continuous repetition intervals 33 are sequentially received, the multiple repetition intervals 33 being physical layer intervals 30 carrying same data information, that is, multiple physical layer intervals 30 with same information can be sequentially and continuously received, which is conducive to increasing the probability that the receiving end successfully receives the information carried in the original interval 31, thereby being conducive to improving the robustness of broadcast packet transmission.

In this embodiment, before the step of sequentially receiving multiple physical layer intervals 30, and performing joint decoding processing on the multiple physical layer intervals 30, the method further includes: a control header field 10 is received, the control header field 10 being used for information indication, and the information indication including the sequence numbers of the repetition intervals 33 and the quantity of the repetition intervals 33.

The control header field 10 is received to obtain a control signal.

In this embodiment, the control header field 10 is decoded to obtain the sequence numbers of the repetition intervals 33 and the quantity of the repetition intervals 33 in the multiple physical layer intervals 30 that are sequentially received.

In this embodiment, before multiple physical layer intervals 30 are sequentially received and joint decoding processing is performed on the multiple physical layer intervals 30, the sequence numbers of the repetition intervals 33 and the quantity of the repetition intervals 33 are obtained. Therefore, in the subsequent step of sequentially receiving the multiple physical layer intervals 30, when a physical layer interval 30 of a corresponding sequence number is received, the physical layer interval is marked as a repetition interval 33, and subsequently, a corresponding quantity of physical layer intervals 30 continuously received are all the repetition intervals 33.

In this embodiment, the step of sequentially receiving multiple physical layer intervals 30, and performing joint decoding processing on the multiple physical layer intervals 30 includes: step t1 is performed: performing one or more decoding processing, the decoding processing including: step t11 is performed: the physical layer interval 30 is received.

The physical layer interval 30 is received to decode the physical layer interval 30 to obtain data information.

In this embodiment, before the physical layer interval 30 is subsequently decoded, the method further includes: demodulation processing is performed on the physical layer interval 30.

Step t12 is performed: the physical layer interval 30 is decoded to obtain a data packet.

The physical layer interval 30 is decoded to obtain the data packet, that is, the data information carried in the physical layer interval 30 is restored. For the repetition interval 33, a target data unit carried in the repetition interval 33 is restored.

Step t13 is performed: the data packet is transmitted to a link layer for check processing.

The data packet is transmitted to the link layer for check processing to check whether decoding on the physical layer interval 30 is correct.

In this embodiment, after the data packet is transmitted to the link layer for check processing, the method further includes: all the subsequent continuous repetition intervals 33 are stopped receiving when the result of the check processing is qualified.

When the result of the check processing is qualified, it indicates that decoding on the physical layer interval 30 is correct, the data information in the physical layer interval 30 is obtained, and all the subsequent continuous repetition intervals 33 are stopped receiving, that is, the decoding processing on all the subsequent continuous repetition intervals 33 is stopped, thereby being conducive to reducing the power consumption of the receiving end.

Specifically, in this embodiment, in the step of receiving the physical layer interval 30, when the physical layer interval 30 is an initial repetition interval 33 of multiple continuous repetition intervals 33, the multiple continuous repetition intervals 33 serve as a period. In decoding processing on the repetition interval 33, after the data packet is transmitted to the link layer for check processing, when the result of the check processing is qualified, all the subsequent continuous repetition intervals 33 in the period are stopped receiving.

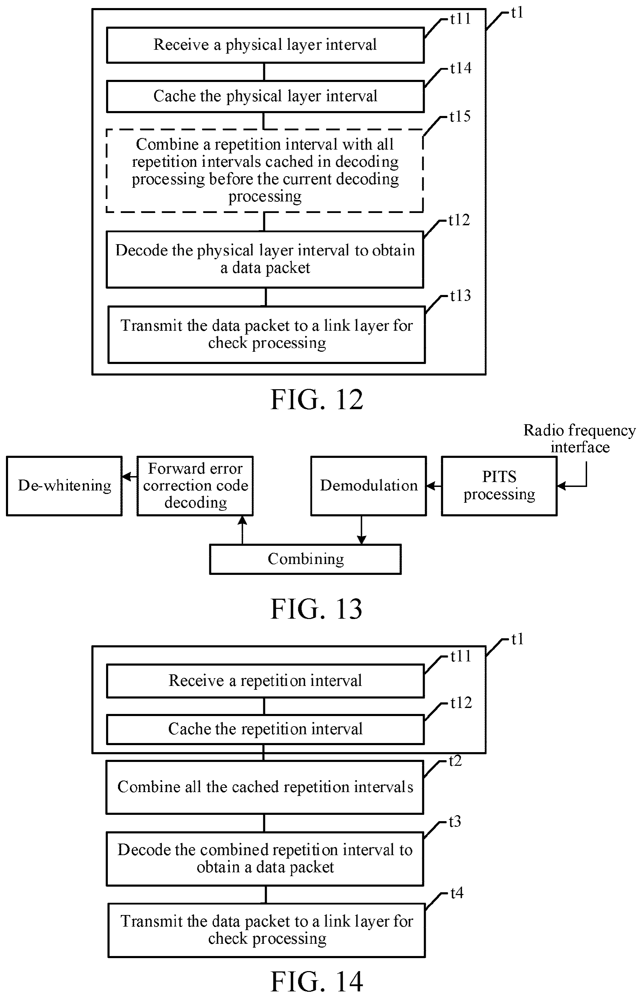

FIG. 12 to FIG. 13 are flowcharts of a broadcast packet transmission method suitable for a receiving end according to another embodiment of the present disclosure.

The similarities between this embodiment and the above embodiments are not repeated here. The difference between this embodiment and the above embodiments is: specific steps of decoding processing are different.

Referring to FIG. 12, in the step of decoding processing, after the physical layer interval 30 is received and before the physical layer interval 30 is decoded, the method further includes: step t14 is performed: the physical layer interval 30 is cached.

The physical layer interval 30 is cached to prepare for subsequent combining.

Specifically, in this embodiment, the related information of the physical layer interval 30 is further cached.

In this embodiment, when the physical layer interval 30 is a repetition interval 33 other than an initial repetition interval 33 in multiple continuous repetition intervals 33, after the physical layer interval 30 is cached and before the physical layer interval 30 is decoded, the method further includes: step t15 is performed: the repetition interval 33 is combined with all repetition intervals 33 cached in decoding processing before the current decoding processing.

When the received physical layer interval 30 is a repetition interval 33 other than an initial repetition interval 33 in multiple continuous repetition intervals 33, it indicates that decoding processing is performed on at least one repetition interval 33 before the current repetition interval 33. Correspondingly, at least one repetition interval 33 is cached before the current decoding processing. In this embodiment, the repetition interval 33 is combined with all repetition intervals 33 cached in decoding processing before the current decoding processing, that is, repetition intervals 33 carrying same data information are combined, so that more accurate data information can be obtained for subsequent more accurate decoding.

Specifically, in this embodiment, the related information of all the cached repetition intervals 33 is also combined.

In this embodiment, the step of combining all the cached repetition intervals 33 includes: weighted average combining is performed on the information of all the cached repetition intervals 33.

In other embodiments, the step of combining all the cached repetition intervals may further include: soft combining is performed on the information of all the cached repetition intervals.

Step t12 is performed: the combined repetition interval 33 is decoded in the step of decoding the physical layer interval 30.

The combined repetition interval 33 is decoded, which is conducive to improving the decoding accuracy.

In this embodiment, after the data packet is transmitted to the link layer for check processing, the method further includes: all the subsequent continuous repetition intervals 33 are stopped receiving when the result of the check processing is qualified.

When the result of the check processing is qualified, it indicates that decoding on the physical layer interval 30 is correct, the data information in the physical layer interval 30 is obtained, and all the subsequent continuous repetition intervals 33 are stopped receiving, that is, the decoding processing on all the subsequent continuous repetition intervals 33 is stopped, thereby being conducive to reducing the power consumption of the receiving end.

Specifically, in this embodiment, in the step of receiving the physical layer interval 30, when the physical layer interval 30 is a repetition interval 33, the multiple continuous repetition intervals 33 serve as a period. In decoding processing on the repetition interval 33, after the data packet is transmitted to the link layer for check processing, when the result of the check processing is qualified, all the subsequent continuous repetition intervals 33 in the period are stopped receiving.

As an example, as shown in FIG. 13, a process at the receiving end includes: PITS processing performed after the physical layer interval is received from a radio frequency interface; demodulation processing; combining; forward error correction code decoding; and de-whitening processing.

FIG. 14 is a flowchart of a broadcast packet transmission method suitable for a receiving end according to still another embodiment of the present disclosure.

The similarities between this embodiment and the above embodiments are not repeated here. The difference between this embodiment and the above embodiments is: specific steps of joint decoding processing are different.

Referring to FIG. 14, the step of sequentially receiving multiple physical layer intervals 30, and performing joint decoding processing on the multiple physical layer intervals 30 includes: step t1 is performed: one or more caching processing is performed until all the repetition intervals 33 are cached, the caching processing including: step t11 is performed: the repetition interval 33 is received.

The repetition interval 33 is received to decode the repetition interval 33 to obtain data information.

Step t12 is performed: the repetition interval 33 is cached.

The repetition interval 33 is cached to prepare for subsequent combining.

Specifically, in this embodiment, the related information of the repetition interval 33 is further cached.

In this embodiment, after one or more caching processing, step t2 is performed: all the cached repetition intervals 33 are combined.

In the step of receiving the physical layer interval 30, when the physical layer interval 30 is a repetition interval 33, multiple continuous repetition intervals 33 serve as a period, and all the cached repetition intervals 33 are combined, that is, all the repetition intervals 33 cached in one period are combined, that is, the repetition intervals 33 carrying same data information are combined, so that more accurate data information can be obtained for subsequent more accurate decoding.

Step t3 is performed: the combined repetition interval 33 is decoded to obtain a data packet.

The combined repetition interval 33 is decoded to obtain the data packet, that is, the data information carried in the repetition interval 33 is obtained, that is, the target data unit carried in the repetition interval 33 is restored, and the combined repetition interval 33 is decoded, thereby being conducive to improving the decoding accuracy.

Step t4 is performed: the data packet is transmitted to a link layer for check processing.

The data packet is transmitted to the link layer for check processing to check whether decoding on the physical layer interval 30 is correct.

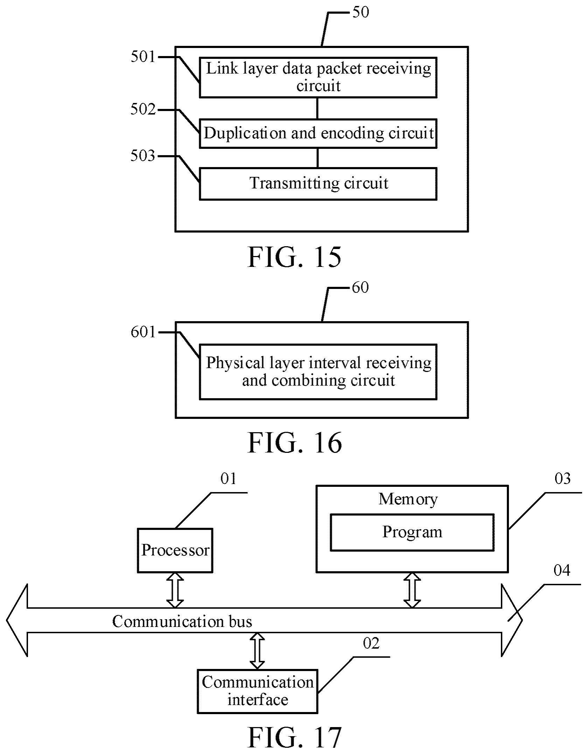

Correspondingly, the present disclosure further provides a broadcast packet transmission system suitable for a sending end. FIG. 15 is a functional block diagram of a broadcast packet transmission system suitable for a sending end according to an embodiment of the present disclosure.

In this embodiment, a broadcast packet transmission system 50 suitable for a sending end includes: a link layer data packet receiving circuit 501, configured to obtain a link layer data packet, the link layer data packet including a target data unit for repeated sending; a duplication and encoding circuit 502, configured to encode the target data unit into a physical layer interval to obtain multiple physical layer intervals respectively carrying same target data unit information as repetition intervals; and a transmitting circuit 503, configured to sequentially transmit the multiple repetition intervals.

In this embodiment, the broadcast packet transmission method is suitable for a BLE broadcast audio. The BLE broadcast audio is a Bluetooth Low Energy Audio (BLE Broadcast Audio).

In the BLE broadcast audio, a Broadcast Audio or an Auracast Audio is introduced to allow multiple devices to simultaneously monitor a broadcast sound source. For example, a group of people in public places may wear earphones to listen to audio information together.

The link layer data packet receiving circuit 501 is configured to obtain a link layer data packet, the link layer data packet including a target data unit for repeated sending.

A link layer (LL) data packet includes data information that needs to be transmitted, and is sent to a Physical Layer (PHY) for encoding.

Specifically, in this embodiment, audio streams of the broadcast audio are on the link layer of the BLE, and depend on a Periodic Advertising mechanism of the BLE. In this mechanism, audio stream data is divided into different Broadcast Isochronous Group Events (BIG Event), and each BIG Event may include one or more Broadcast Isochronous Stream Events (BIS Event). The BIS Event is further divided into one or more subevents, and each subevent may send a link layer data packet.

The link layer data packet includes the target data unit for repeated sending, and the target data unit is used for repeated sending multiple times, so that the information of the target data unit is received by the receiving end for multiple times, thereby increasing the probability that the target data unit is successfully received.

Specifically, in this embodiment, a same target data packet is repeatedly sent in one BIS event by occupying multiple subevents, and a corresponding parameter of the quantity of times of repetition is an immediate repetition count (IRC). A larger IRC parameter indicates a higher probability that the information of the target data packet is successfully received by the receiving end.

In this embodiment, in the step of obtaining a link layer data packet, the target data unit includes multiple data blocks.

Specifically, a High Data Throughput Multi-Block Format (HDT Multi-Block Format) of the BLE is introduced to the BLE broadcast. In this HDT Multi-Block Format, one LL HDT Format includes multiple Payload Data Units (PDU), and each PDU may be partitioned into multiple data blocks (Block).

In this embodiment, the target data unit is a PDU, including multiple data blocks (Block). The data blocks are independent of each other and have independent link layer check codes. Therefore, when the data blocks are received by the receiving end, each data block may be separately checked. If a data block in a target data unit is not received successfully, other data blocks in the target data unit are not affected, which is conducive to increasing the probability that the information of the target data unit is successfully received by the receiving end.

The duplication and encoding circuit 502 is configured to perform duplication and encoding processing to encode the target data unit into a physical layer interval to obtain multiple physical layer intervals respectively carrying same target data unit information as repetition intervals.

Multiple physical layer intervals respectively carrying same target data unit information are obtained as repetition intervals to send same data information to the receiving end for multiple times.

In this embodiment, before the duplication and encoding processing is performed, the method further includes: a control header field is configured for information indication, the information indication including sequence numbers of the repetition intervals and a quantity of repetition intervals.

In this embodiment, the control header field is responsible for receiving and parsing a control signal to manage and operate a device or an interface.

In this embodiment, before the duplication and encoding processing is performed, the method further includes: a control header field is configured for information indication, the information indication including modulation and encoding related information of a data unit header (PDU Header) field.

The control header field is used for information indication to indicate a physical layer parameter of the data unit header field and a physical layer parameter of a data unit load. Specifically, the physical layer parameter may be selected as a parameter of a modulation and encoding policy that has a lower order than the lowest rate in the existing BLE HDT and higher robustness, so as to improve the sending robustness of the entire BLE HDT packet.

As an example, in the step of configuring a control header field, a Rate Information (RI) field is used for information indication.

Correspondingly, in this embodiment, the data unit header field is configured according to the information indication.

In this embodiment, the step of performing duplication and encoding processing includes: the target data unit is encoded into a physical layer interval to obtain a physical layer interval carrying target data unit information as an original interval.

The original interval is used as a target for subsequent duplication, and is further used for subsequent transmission to the receiving end.

In the BLE broadcast, a physical layer interval (PHY Interval) refers to a bit stream continuously sent on a physical layer.

In this embodiment, in the step of encoding the target data unit into the physical layer interval, some or all data blocks of a target data unit are encoded into the physical layer interval as the original interval.

Specifically, some or all Blocks of a PDU are encoded into the physical layer interval.

In other embodiments, in the step of encoding the target data unit into the physical layer interval, some or all data blocks of multiple target data units may further be encoded into the physical layer interval as the original interval.

Specifically, some or all Blocks of multiple PDUs are encoded into the physical layer interval.

In some other embodiments, in the step of obtaining a link layer data packet, the target data unit is not divided into multiple data blocks; and in the step of encoding the target data unit into a physical layer interval, one or more different target data units are encoded into the physical layer interval as the original interval.

That is, the original interval is a physical layer interval carrying one or more different target data unit information, a physical layer interval carrying some or all data block information of one target data unit, or a physical layer interval carrying some or all data block information of the multiple target data units.

In this embodiment, the step of encoding the target data unit into the physical layer interval to obtain the physical layer interval carrying target data unit information as the original interval includes: the target data unit is encoded into the physical layer interval to obtain a target encoding block.

Specifically, in this embodiment, different target data units in the link layer have different byte lengths. Therefore, when the target data unit is encoded into the physical layer interval, the time lengths of the obtained target encoding blocks are different.

In this embodiment, a symbol zero padding is added to a tail of the target encoding block, so that a length of a physical layer interval formed by the target encoding block and the symbol zero padding reaches a preset interval length, and the physical layer interval formed by the target encoding block and the symbol zero padding is used as an original interval.

Specifically, in this embodiment, the time lengths of the target encoding blocks are different, and symbol zero paddings are added to the tails of the target encoding blocks. Specifically, different quantities of symbol zero paddings are added to the tails of different target encoding blocks, so that the length of a physical layer interval formed by each target encoding block and each symbol zero padding is the same, reaching a preset interval length, and the data information of the physical layer interval is sent at a fixed time interval.

In other embodiments, code complementation may further be first performed on the link layer, and then, the physical layer is encoded to obtain the physical layer intervals having the same length.

In other embodiments, the step of obtaining a link layer data packet includes: an initial data packet is obtained; and a zero padding byte is added to a tail of the initial data packet so that a length of a data packet formed by the initial data packet and the zero padding byte reaches a preset data packet length, and the link layer data packet is formed by the initial data packet and the zero padding byte.

Specifically, on the link layer, initial data packets have different byte lengths. First, a zero padding byte is added to the tail of the initial data packet. Specifically, different quantities of zero padding bytes are added to the tails of different initial data packets, so that a data packet formed by each initial data packet and each zero padding byte has the same length, reaching a preset data packet length. In the step of encoding a target data unit into a physical layer interval to obtain a physical layer interval carrying target data unit information as an original interval, the physical layer interval of each original interval is equal, so that the data information of the physical layer interval is sent at a fixed time interval.

In this embodiment, before the target data unit is encoded into the physical layer interval, the method further includes: whitening processing is performed on the target data unit.

Whitening the target data unit can reduce the redundancy between data features and improve the data representation capability, thereby improving the data accuracy of the target data unit.

Correspondingly, in this embodiment, the information indication of the control header field includes the sequence number of the original interval and the quantity of duplicated intervals corresponding to the original interval.

The sequence number of the original interval means that during encoding, the physical layer interval of the sequence number of the information indication is a physical layer interval that needs to be duplicated, that is, the original interval, and the quantity of duplicated intervals corresponding to the original interval is the quantity of duplicated intervals obtained by continuously duplicating the original interval subsequently.

In this embodiment, before one or more duplication processing is subsequently performed on the original interval, the method further includes: an auxiliary encoding field and a channel estimation field are configured at a tail of the original interval.

Specifically, the auxiliary encoding field and the channel estimation field include Terminating bits, Symbol zero paddings, and Terminating symbols.

In this embodiment, physical layer interval training symbols (PITS) are further configured at the tails of the auxiliary encoding field and the channel estimation field that are configured at the tail of the original interval.

In this embodiment, before the target data unit is encoded into the physical layer interval, the method further includes: preamble fields located before the control header field are configured, and include Short Training Symbols (STS), a Guard Interval (GI), and Long Training Symbols (LTS).

It should be noted that the above whitening processing is limited only in the data unit header (PDU Header) field and each physical layer interval, where the whitening processing does not include an auxiliary encoding field, a channel estimation field, and a physical layer interval training symbol between adjacent physical layer intervals.

In this embodiment, one or more duplication (DUP) processing is performed on the original interval to obtain one or more continuous duplicated intervals, and both the original interval and one or more continuous duplicated intervals are used as repetition intervals.

One or more duplication processing is performed on the original interval to obtain a duplicated interval with data information the same as that carried in the original interval, so that the original interval and the duplicated interval can repeatedly send the target data unit to the receiving end.

In this embodiment, the duplicated interval with information the same as that of the original interval is obtained through duplication processing, and the original interval and one or more duplicated intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

In this embodiment, in the step of performing one or more duplication processing on the original interval to obtain one or more continuous duplicated intervals, physical layer intervals with same data information may be obtained. As shown in the figure, that is, except that a first physical layer interval is an original interval (PHY Interval), other physical layer intervals are all duplicated intervals (PHY Interval -DUP). Alternatively, corresponding duplication processing may be performed on multiple different physical layer intervals. As shown in the figure, that is, a first physical layer interval is an original interval (PHY Interval), a second physical layer interval is a duplicated interval (PHY Interval -DUP) of the first original interval, a third physical layer interval is another original interval (PHY Interval), and a fourth physical layer interval is a duplicated interval (PHY Interval -DUP) of another original interval. Alternatively, the quantity of duplicated intervals obtained through duplication processing is not limited. As shown in the figure, that is, there may be one or more duplicated intervals (PHY Interval -DUP) obtained through duplication processing on the original interval (PHY Interval).

In this embodiment, in the step of performing one or more duplication processing on the original interval, the auxiliary encoding field and channel estimation field corresponding to the original interval are further duplicated to obtain the auxiliary encoding field and channel estimation field configured at a tail of the duplicated interval.

In this embodiment, the above whitening processing is limited only in the data unit header (PDU Header) field and each physical layer interval. In the step of performing one or more duplication processing on the original interval, the data information of the duplicated original interval is data information obtained after the whitening processing, and the whitening processing may end at a tail of the original interval. The step of the whitening processing does not need to be performed in the duplicated interval, which is conducive to simplifying the program calculation and improving the broadcast packet transmission efficiency.

In this embodiment, before the repetition interval is subsequently transmitted, the method further includes: modulation processing is performed on the physical layer interval.

In other embodiments, the step of performing duplication and encoding processing may further include: the target data unit is repeatedly encoded to respectively encode the target unit into multiple physical layer intervals to obtain multiple physical layer intervals respectively carrying same target data unit information as repetition intervals.

The transmitting circuit 503 is configured to sequentially transmit the multiple repetition intervals.

In this embodiment, multiple repetition intervals with same data information are obtained by duplication and encoding processing, and the multiple repetition intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

Correspondingly, in this embodiment, the original interval and one or more duplicated intervals are sequentially transmitted.

The original interval and one or more duplicated intervals are sequentially transmitted, so that the receiving end sequentially receives the original interval and one or more duplicated intervals to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

The present disclosure further provides a broadcast packet transmission system suitable for a receiving end. FIG. 16 is a functional block diagram of a broadcast packet transmission system suitable for a receiving end according to an embodiment of the present disclosure.

In this embodiment, a broadcast packet transmission system 60 suitable for a receiving end includes: a physical layer interval receiving and combining circuit 601, configured to sequentially receive multiple physical layer intervals, and perform joint decoding processing on the multiple physical layer intervals, the multiple physical layer intervals including multiple successively continuous repetition intervals, and the multiple repetition intervals being physical layer intervals carrying same data information.

In this embodiment, the broadcast packet transmission method is suitable for a BLE broadcast audio. The BLE broadcast audio is a Bluetooth Low Energy Audio (BLE Broadcast Audio).

In the BLE broadcast audio, a Broadcast Audio or an Auracast Audio is introduced to allow multiple devices to simultaneously monitor a broadcast sound source. For example, a group of people in public places may wear earphones to listen to audio information together.

In this embodiment, multiple continuous repetition intervals are sequentially received, the multiple repetition intervals being physical layer intervals carrying same data information, that is, multiple physical layer intervals with same information can be sequentially and continuously received, which is conducive to increasing the probability that the receiving end successfully receives the information carried in the original interval, thereby being conducive to improving the robustness of broadcast packet transmission.

In this embodiment, before multiple physical layer intervals are sequentially received and joint decoding processing is performed on the multiple physical layer intervals, the method further includes: a control header field is received, the control header field being used for information indication, and the information indication including sequence numbers of the repetition intervals and a quantity of the repetition intervals.

The control header field is received to obtain a control signal.

In this embodiment, the control header field is decoded to obtain sequence numbers of the repetition intervals and a quantity of the repetition intervals in the multiple physical layer intervals that are sequentially received.

In this embodiment, before multiple physical layer intervals are sequentially received and joint decoding processing is performed on the multiple physical layer intervals, sequence numbers of the repetition intervals and a quantity of the repetition intervals are obtained. Therefore, in the subsequent step of sequentially receiving the multiple physical layer intervals, when a physical layer interval of a corresponding sequence number is received, the physical layer interval is marked as a repetition interval, and subsequently, a corresponding quantity of physical layer intervals continuously received are the repetition intervals.

In this embodiment, the physical layer interval receiving and combining circuit 601 includes: a decoding processing circuit, configured to perform one or more decoding processing. The decoding processing circuit includes: a receiving component, configured to receive physical layer intervals.

The physical layer interval is received to decode the physical layer interval to obtain data information.

In this embodiment, before the physical layer interval is subsequently decoded, the method further includes: demodulation processing is performed on the physical layer interval.

The decoding processing circuit further includes a decoding component, configured to decode the physical layer interval to obtain a data packet.

The physical layer interval is decoded to obtain the data packet, that is, the data information carried in the physical layer interval is restored. For the repetition interval, a target data unit carried in the repetition interval is restored.

The decoding processing circuit further includes a check component, configured to transmit the data packet to a link layer for check processing.

The data packet is transmitted to the link layer for check processing to check whether decoding on the physical layer interval is correct.

In this embodiment, after the data packet is transmitted to the link layer for check processing, the method further includes: all the subsequent continuous duplicated intervals are stopped receiving when the result of the check processing is qualified.

When the result of the check processing is qualified, it indicates that decoding on the physical layer interval is correct, the data information in the physical layer interval is obtained, and all the subsequent continuous duplicated intervals are stopped receiving, that is, the decoding processing on all the subsequent continuous duplicated intervals is stopped, thereby being conducive to reducing the power consumption of the receiving end.

Specifically, in this embodiment, in the step of receiving the physical layer interval, when the physical layer interval is an initial repetition interval of the multiple continuous repetition intervals, the multiple continuous repetition intervals serve as a period. In decoding processing on the repetition interval, after the data packet is transmitted to the link layer for check processing, when the result of the check processing is qualified, all the subsequent continuous repetition intervals in the period are stopped receiving.

The present disclosure further provides another embodiment of a broadcast packet transmission method suitable for a receiving end.

The similarities between this embodiment and the above embodiments are not repeated here. The difference between this embodiment and the above embodiments is: specific steps of decoding processing are different.

In this embodiment, the decoding processing circuit includes: a caching component, configured to cache the physical layer interval.

The physical layer interval is cached to prepare for subsequent combining.

Specifically, in this embodiment, the related information of the physical layer interval is further cached.

In this embodiment, when the physical layer interval is a repetition interval other than an initial repetition interval in multiple continuous repetition intervals, after the physical layer interval is cached and before the physical layer interval is decoded, the method further includes: a combining component, configured to combine the repetition interval with all repetition intervals cached in decoding processing before the current decoding processing.

When the received physical layer interval is a repetition interval other than an initial repetition interval in multiple continuous repetition intervals, it indicates that decoding processing is performed on at least one repetition interval before the current repetition interval. Correspondingly, at least one repetition interval is cached before the current decoding processing. In this embodiment, the repetition interval is combined with all repetition intervals cached in decoding processing before the current decoding processing, that is, repetition intervals carrying same data information are combined, so that more accurate data information can be obtained for subsequent more accurate decoding.

Specifically, in this embodiment, the related information of all the cached repetition intervals is also combined.

In this embodiment, the step of combining all the cached repetition intervals includes: weighted average combining is performed on the information of all the cached repetition intervals.

In other embodiments, the step of combining all the cached repetition intervals may further include: Soft combining is performed on the information of all the cached repetition intervals.

In this embodiment, when the physical layer interval is a repetition interval, the decoding component is configured to decode the combined repetition interval.

The combined repetition interval is decoded, which is conducive to improving the decoding accuracy.

In this embodiment, after the data packet is transmitted to the link layer for check processing, the method further includes: all the subsequent continuous repetition intervals are stopped receiving when the result of the check processing is qualified.

When the result of the check processing is qualified, it indicates that decoding on the physical layer interval is correct, the data information in the physical layer interval is obtained, and all the subsequent continuous repetition intervals are stopped receiving, that is, the decoding processing on all the subsequent continuous repetition intervals is stopped, thereby being conducive to reducing the power consumption of the receiving end.

Specifically, in this embodiment, in the step of receiving the physical layer interval, when the physical layer interval is a repetition interval, the multiple continuous repetition intervals serve as a period. In decoding processing on the multiple repetition intervals, after the data packet is transmitted to the link layer for check processing, when the result of the check processing is qualified, all the subsequent continuous repetition intervals in the period are stopped receiving.

The present disclosure further provides still another embodiment of a broadcast packet transmission method suitable for a receiving end.

The similarities between this embodiment and the above embodiments are not repeated here. The difference between this embodiment and the above embodiments is: specific steps of joint decoding processing are different.

In this embodiment, the physical layer interval receiving and combining circuit 601 includes: a caching circuit, configured to perform one or more caching processing until all the repetition intervals are cached. The caching circuit includes: a receiving component, configured to receive the repetition interval.

The repetition interval is received to decode the repetition interval to obtain data information.

The caching circuit further includes a caching component, configured to cache the repetition interval.

The repetition interval is cached to prepare for subsequent combining.

Specifically, in this embodiment, the related information of the repetition interval is further cached.

In this embodiment, after one or more caching processing, the physical layer interval receiving and combining circuit 601 further includes: a combining component, configured to combine all the cached repetition intervals.

In the step of receiving the physical layer interval, when the physical layer interval is a repetition interval, multiple continuous repetition intervals serve as a period, and all the cached repetition intervals are combined, that is, all the repetition intervals cached in one period are combined, that is, the repetition intervals carrying same data information are combined, so that more accurate data information can be obtained for subsequent more accurate decoding.

The physical layer interval receiving and combining circuit further includes a decoding component, configured to decode the combined repetition interval to obtain a data packet.

The combined repetition interval is decoded to obtain the data packet, that is, the data information carried in the physical layer interval is restored. For the repetition interval, the target data unit carried in the repetition interval is restored, and the combined repetition interval is decoded, thereby being conducive to improving the decoding accuracy.

The physical layer interval receiving and combining circuit further includes a check component, configured to transmit the data packet to a link layer for check processing.

The data packet is transmitted to the link layer for check processing to check whether decoding on the physical layer interval is correct.

An embodiment of the present disclosure further provides a device. The device may implement the broadcast packet transmission method suitable for a sending end provided in the embodiments of the present disclosure by loading the above broadcast packet transmission method suitable for a sending end in the form of a program, or the device may implement the broadcast packet transmission method suitable for a receiving end provided in the embodiments of the present disclosure by loading the above broadcast packet transmission method suitable for a receiving end in the form of a program. An optional hardware structure of a terminal device provided in an embodiment of the present disclosure may be shown in FIG. 17, and includes: at least one processor 01, at least one communication interface 02, at least one memory 03, and at least one communication bus 04.

In this embodiment, there are at least one processor 01, communication interface 02, memory 03, and communication bus 04, and the processor 01, the communication interface 02, and the memory 03 communicate with each other through the communication bus 04. The communication interface 02 may be an interface of a communication circuit for network communication, such as an interface of a GSM circuit. The processor 01 may be a Central Processing Unit (CPU), an Application Specific Integrated Circuit (ASIC), or one or more integrated circuits configured to implement the embodiments of the present disclosure. The memory 03 may include a high-speed RAM, and may also include a non-volatile memory (NVM), such as at least one disk memory. The memory 03 stores one or more computer instructions, and the one or more computer instructions are executed by the processor 01 to implement the broadcast packet transmission method suitable for a sending end or the broadcast packet transmission method suitable for a receiving end provided in the embodiments of the present disclosure.

It should be noted that the above implementation terminal device may further include other devices (not shown) that may not be necessary to the content disclosed in the embodiments of the present disclosure. These other devices may not be necessary for understanding the content disclosed in the embodiments of the present disclosure, and are not introduced one by one in the embodiments of the present disclosure.

An embodiment of the present disclosure further provides a storage medium. The storage medium stores one or more computer instructions, and the one or more computer instructions are used for implementing the broadcast packet transmission method suitable for a sending end or the broadcast packet transmission method suitable for a receiving end provided in the embodiments of the present disclosure.

An embodiment of the present disclosure further provides a computer program product, including a computer program/instruction. When being executed by a processor, the computer program/instruction implements the broadcast packet transmission method suitable for a sending end or the broadcast packet transmission method suitable for a receiving end provided in the embodiments of the present disclosure.

In the broadcast packet transmission method suitable for a sending end provided in the embodiments of the present disclosure, the duplicated interval with information the same as that of the original interval is obtained through duplication processing, and the original interval and one or more duplicated intervals are sequentially transmitted to achieve broadcast transmission of repeatedly sent target data units, which is conducive to increasing the probability that one or more receiving ends butted to the sending end successfully receive information of the target data unit, thereby being conducive to improving the robustness of broadcast packet transmission.

In the broadcast packet transmission method suitable for a receiving end provided in the embodiments of the present disclosure, one original interval and one or more continuous duplicated intervals are sequentially received, where the duplicated interval is a physical layer interval obtained by duplicating the original interval, that is, multiple physical layer intervals with same information can be sequentially and continuously received, which is conducive to increasing the probability that the receiving end successfully receives the information carried in the original interval, thereby being conducive to improving the robustness of broadcast packet transmission.

The implementations of the present disclosure described above are a combination of elements and features of the present disclosure. Unless otherwise mentioned, elements or features may be considered to be selective. Each element or feature may be implemented without being combined with other elements or features. In addition, the implementations of the present disclosure may be configured by combining a part of elements and/or features. The order of operations described in the implementations of the present disclosure may be rearranged. Some configurations of any implementation may be included in another implementation and may be replaced with corresponding configurations of another implementation. For those skilled in the art, it is obvious that the claims that do not have a clear reference relationship with each other in the appended claims may be combined into the implementations of the present disclosure, or may be included as new claims in modifications made after the present application is submitted.

The implementations of the present disclosure may be implemented by various means such as hardware, firmware, software, or a combination thereof. In a hardware configuration mode, the method according to the exemplary implementations of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like. In a firmware or software configuration mode, the implementations of the present disclosure may be implemented in the form of circuits, processes, functions, and the like. Software codes may be stored in a memory component and executed by a processor. The memory component is located inside or outside the processor, and may send data to the processor and receive data from the processor by various known means.

An embodiment of the present disclosure further provides a computer program product, including a computer program/instruction. When being executed by a processor, the computer program/instruction implements the broadcast packet transmission method suitable for a sending end or the broadcast packet transmission method suitable for a receiving end provided in the embodiments of the present disclosure.

The above description of the disclosed embodiments enables those skilled in the art to implement or use the present disclosure. Various modifications to these embodiments are apparent to those skilled in the art, and the general principles defined herein may be implemented in other embodiments without departing from the spirit or scope of the present disclosure. Therefore, the present disclosure is not limited to these embodiments illustrated herein, but conforms to the broadest scope consistent with the principles and novel features disclosed in the present disclosure.

Although the present disclosure is disclosed above, the present disclosure is not limited thereto. Any person skilled in the art can make various alterations and modifications without departing from the spirit and scope of the present disclosure. Therefore, the scope of protection of the present disclosure should be subject to the scope defined by the claims.

## Claims

1. A broadcast packet transmission method suitable for a sending end, comprising:
obtaining a link layer data packet, the link layer data packet comprising a target data unit for repeated sending;
performing duplication and encoding processing, and encoding the target data unit into a physical layer interval to obtain a plurality of physical layer intervals respectively carrying same target data unit information as repetition intervals; and
sequentially transmitting the plurality of repetition intervals.

2. The broadcast packet transmission method according to claim 1, wherein the step of performing duplication and encoding processing, and encoding the target data unit into a physical layer interval to obtain a plurality of physical layer intervals respectively carrying same target data unit information as repetition intervals comprises: encoding the target data unit into a physical layer interval to obtain a physical layer interval carrying the target data unit information as an original interval; and
performing one or more duplication processing on the original interval to obtain one or more continuous duplicated intervals, both the original interval and the one or more continuous duplicated intervals being used as the repetition intervals.

3. The broadcast packet transmission method according to claim 2, wherein the original interval is a physical layer interval carrying one or more different encoded target data units, a physical layer interval carrying some or all encoded data blocks of one target data unit, or a physical layer interval carrying some or all data blocks of the plurality of target data units.

4. The broadcast packet transmission method according to claim 2 or 3, wherein before the performing one or more duplication processing on the original interval, the method further comprises: configuring an auxiliary encoding field and a channel estimation field at a tail of the original interval; and
in the step of performing one or more duplication processing on the original interval, further performing duplication processing on the auxiliary encoding field and the channel estimation field corresponding to the original interval to obtain an auxiliary encoding field and a channel estimation field configured at a tail of the duplicated interval.

5. The broadcast packet transmission method according to claim 2, wherein the step of encoding the target data unit into a physical layer interval to obtain a physical layer interval carrying the target data unit information as an original interval comprises: encoding the target data unit into a physical layer interval to obtain a target encoding block; and
adding a symbol zero padding to a tail of the target encoding block to enable a length of a physical layer interval formed by the target encoding block and the symbol zero padding to reach a preset interval length, and using the physical layer interval formed by the target encoding block and the symbol zero padding as the original interval;
or
the step of obtaining a link layer data packet comprises: obtaining an initial data packet; and
adding a zero padding byte to a tail of the initial data packet so that a length of a data packet formed by the initial data packet and the zero padding byte reaches a preset data packet length, and forming the link layer data packet by the initial data packet and the zero padding byte.

6. A broadcast packet transmission method suitable for a receiving end, comprising:
sequentially receiving a plurality of physical layer intervals, and performing joint decoding processing on the plurality of physical layer intervals, the plurality of physical layer intervals comprising a plurality of successively continuous repetition intervals, and the plurality of repetition intervals being physical layer intervals carrying same data information.

7. The broadcast packet transmission method according to claim 6, wherein the sequentially receiving a plurality of physical layer intervals, and performing joint decoding processing on the plurality of physical layer intervals comprises: performing one or more decoding processing, the decoding processing comprising: receiving the physical layer interval;
decoding the physical layer interval to obtain a data packet; and
transmitting the data packet to a link layer for check processing.

8. The broadcast packet transmission method according to claim 7, wherein in the step of decoding processing, after the receiving the physical layer interval and before the decoding the physical layer interval, the method further comprises: caching the physical layer interval; and
when the physical layer interval is a repetition interval other than an initial repetition interval in a plurality of continuous repetition intervals, after the caching the physical layer interval and before the decoding the physical layer interval, the method further comprises: combining the repetition interval with all repetition intervals cached in decoding processing before the current decoding processing; and
decoding the combined repetition interval in the step of decoding the physical layer interval.

9. The broadcast packet transmission method according to claim 6, wherein the sequentially receiving a plurality of physical layer intervals, and performing joint decoding processing on the plurality of physical layer intervals comprises: performing one or more caching processing until all the repetition intervals are cached, the caching processing comprising: receiving the repetition interval;
caching the repetition interval;
combining all the cached repetition intervals after one or more caching processing;
decoding the combined repetition interval to obtain a data packet; and
transmitting the data packet to a link layer for check processing.

10. The broadcast packet transmission method according to claim 8 or 9, wherein the step of combining all the cached repetition intervals comprises: performing weighted average combining on the information of all the cached repetition intervals;
or
performing soft combining on the information of all the cached repetition intervals.

11. A broadcast packet transmission system suitable for a sending end, comprising:
a link layer data packet receiving circuit, configured to obtain a link layer data packet, the link layer data packet comprising a target data unit for repeated sending;
a duplication and encoding circuit, configured to encode the target data unit into a physical layer interval to obtain a plurality of physical layer intervals respectively carrying same target data unit information as repetition intervals; and
a transmitting circuit, configured to sequentially transmit the plurality of repetition intervals.

12. A broadcast packet transmission system suitable for a receiving end, comprising:
a physical layer interval receiving and combining circuit, configured to sequentially receive a plurality of physical layer intervals, and perform joint decoding processing on the plurality of physical layer intervals, the plurality of physical layer intervals comprising a plurality of successively continuous repetition intervals, and the plurality of repetition intervals being physical layer intervals carrying same data information.

13. A device, comprising at least one memory and at least one processor, the memory storing one or more computer instructions, wherein the one or more computer instructions are executed by the processor to implement the broadcast packet transmission method suitable for a sending end according to any one of claims 1 to 5, or implement the broadcast packet transmission method suitable for a receiving end according to any one of claims 6 to 10.

14. A storage medium, storing one or more computer instructions, wherein the one or more computer instructions are used for implementing the broadcast packet transmission method suitable for a sending end according to any one of claims 1 to 5, or implementing the broadcast packet transmission method suitable for a receiving end according to any one of claims 6 to 10.

15. A computer program product, comprising a computer program/instruction, wherein the computer program/instruction, when executed by a processor, implements the broadcast packet transmission method suitable for a sending end according to any one of claims 1 to 5, or implements the broadcast packet transmission method suitable for a receiving end according to any one of claims 6 to 10.
